# EUROPÄISCHE PATENTSCHRIFT

(11) **EP 2 144 724 B1**
(45) Veröffentlichungstag und Bekanntmachung des Hinweises auf die Patenterteilung: **11.05.2011**
(21) Anmeldenummer: 08707521.4
(22) Anmeldetag: 02.02.2008
(51) Int. Cl.: B23B 27/16

(54) **ACHTSCHNEIDIGER SCHNEIDEINSATZ SOWIE WERKZEUGHALTER HIERFÜR**
CUTTING INSERT CUTTING EIGHT WAYS, AND TOOL HOLDER FOR SAME
OUTIL DE COUPE À HUIT TRANCHANTS ET PORTE-OUTIL CORRESPONDANT

(30) Priorität: 14.05.2007 DE 102007022535
(43) Veröffentlichungstag der Anmeldung: 20.01.2010
(73) Patentinhaber: Kennametal Inc., Latrobe, PA 15650-0231 (US)
(72) Erfinder: HARTLÖHNER, Rudi, 90587 Tuchenbach (DE); KAUFMANN, Igor, 90469 Nürnberg (DE)
(74) Vertreter: FDST Patentanwälte
(86) Internationale Anmeldenummer: PCT/EP2008/000840
(87) Internationale Veröffentlichungsnummer: WO 2008/138414

(56) Entgegenhaltungen:
- EP-A- 1 380 375
- DE-B- 1 232 436
- US-A1- 2005 214 081

## Beschreibung

Die Erfindung bezieht sich auf einen achtschneidigen, dreh- und wendbaren Schneideinsatz mit zwei einander gegenüberliegenden, im Wesentlichen quadratischen Grundflächen, die um eine zu diesen senkrecht verlaufende Zentralachse gegeneinander verdreht sind, sowie mit vier identischen Seitenflächen, wobei zwischen jeder Grundfläche und jeder Seitenfläche eine Hauptschneide gebildet ist. Sie bezieht sich weiter auf einen Werkzeughalter für einen solchen Schneideinsatz.

Aus der DE-AS 1 232 436, die dem Oberbegriff von Anspruch 1 zugrundeliegt, ist ein mehrschneidiger Schneidkörper aus hartem Schneidwerkstoff bekannt, dessen Schneidkörper aus zwei pyramidenstumpfartigen Schneidkörperhälften gebildet ist, deren einander unter Ausbildung von vier gleichartigen Seitenflächen gegenüberliegenden Grundflächen gegeneinander verdreht sind. Die Seitenflächen bilden mit beiden Grundflächen insgesamt acht Schneidkanten, die sich jeweils über die gesamte Länge der Seitenflächen bzw. der Grundflächen erstrecken. Eine rechtwinklig zu den Grundflächen der Schneidkörperhälften und somit senkrecht zur Zentralachse verlaufende zentrale Bohrung dient zur Aufnahme einer Schraube, mittels derer der Schneideinsatz in einer Ausnehmung eines Werkzeughalters befestigbar ist. Die vier identischen Seitenflächen weisen den jeweiligen Schneidkanten zugeordnete und an diese angrenzende ebene Spanflächen auf, die sich quer zur Zentralachse entlang der gesamten Schneidkante und in Richtung der Zentralachse bis zur Seitenflächenmitte hin erstrecken, in der die beiden Schneidkörperhälften aneinander grenzen.

Bei der beispielsweise in einen Drehmeißel eingesetzten Tangentialschneidplatte können deren acht Schneidkanten durch Drehen und Wenden der Schneidplatte im Werkzeughalter nacheinander in Benutzung genommen werden.

Die EP 1 380 375 zeigt einen ähnlichen Schneidkörper, dessen Seitenflächen durchgehende Spannuten und eine Anlagefläche aufweisen.

Der Erfindung liegt die Aufgabe zugrunde, einen insbesondere hinsichtlich eines zuverlässigen Plattensitzes in einem Werkzeughalter verbesserten achtschneidigen Schneideinsatz der eingangs genannten Art anzugeben. Des Weiteren soll ein zur Aufnahme eines derartigen Schneideinsatzes besonders geeigneter Werkzeughalter angegeben werden.

Diese Aufgabe wird erfindungsgemäß gelöst durch die Merkmale des Anspruches 1. Vorteilhafte Ausgestaltungen, Weiterbildungen und Varianten sind Gegenstand der auf diesen rückbezogenen Unteransprüche.

Der erfindungsgemäße, achtschneidige dreh- und wendbare Schneideinsatz weist in jeder Seitenfläche zwischen den Spanstufen eine Anlagefläche auf, die sich symmetrisch über die Stufenenden der angrenzenden Spanstufe hinaus und in Querrichtung der Hauptschneiden bis an diese angrenzend erstreckt.

In vorteilhafter Ausgestaltung erstrecken sich die Hauptschneiden lediglich über einen Teil der Länge der jeweiligen Seitenfläche. Insbesondere erstreckt sich die jeweilige Hauptschneide zwischen der zugeordneten Eckenkante und einem abgerundeten Kantenabschnitt dieser Grundfläche. Die Eckenkanten sind vorzugsweise abgerundet bzw. kreis- oder bogenförmig ausgebildet. Der abgerundete Kantenabschnitt bildete zweckmäßigerweise zumindest teil- oder abschnittsweise die Nebenfreifläche der Nebenschneide der angrenzenden Seitenfläche.

Die Anlagefläche weist eine etwa kreisförmige oder ovale Flächenkontur mit einem hyperbelartig eingezogenen, taillierten mittleren Flächenbereich auf. Die Anlagefläche hat in dieser Ausgestaltung die Form einer Streitaxt. Die Spanstufen sind hierbei zwischen dem taillierten mittleren Flächenbereich und den einander diagonal gegenüberliegenden Eckenkanten (Eckenradien) gebildet.

Zweckmäßigerweise erstreckt sich auch die Anlagefläche in Längsrichtung der Hauptschneiden über die gesamte Seitenfläche. In einer hierzu besonders vorteilhaften Flächenform oder Geometrie weist die Anlagefläche symmetrisch, insbesondere rotationssymmetrisch zum taillierten mittleren Flächenbereich zwei keilförmige Flächenbereiche aufweist. Deren Flächenspitzen sind vorzugsweise bis an die Nebenschneiden der angrenzenden Seitenflächen herangeführt. Bei dieser Variante bildet der jeweilige keilförmige Flächenbereich der Anlagefläche, insbesondere in Verbindung mit dem abgerundeten Kantenabschnitt, die oder einen Teil der Nebenfreifläche für die Nebenschneide der angrenzenden Seitenfläche.

Die jeweilige Spanstufe weist eine der jeweiligen Eckenkante diagonal gegenüber liegende Stufenecke auf, die geeigneterweise abgerundete, insbesondere kreis- oder bogenförmig ist. Mit dieser Stufenecke grenzt die Spanstufe an die Anlagefläche an. Die Spanstufen sind bevorzugt als in die Seitenfläche eingezogene Spanmulden ausgebildet. Diese Spanmulden erstrecken sich entlang der dieser zugeordneten Hauptschneide zwischen der Eckenkante, an der die Hauptschneide in die Nebenschneide übergeht, bis zu einem rückwärtigen Spanmuldenende. Die Spanmulde endet innerhalb dieser Seitenfläche am jeweiligen Spanmuldenende. Die Spanmulden sind dabei ebenso wie die Nebenschneiden, die Hauptschneiden und die diese verbindenden Eckenkanten, die zweckmäßigerweise kreis- oder bogenförmig ausgebildet sind, diagonal gegenüberliegend angeordnet. Jede Spanmulde sowie die dieser zugeordnete Hauptschneide und die ebenfalls dieser Spanmulde zugeordnete, im Wesentlichen quer zur Hauptschneide verlaufende Nebenschneide befinden sich somit stets im Bereich einer der beiden Schneidkörper- oder Schneideinsatzhälften, deren zueinander um die Breite der Seitenfläche beabstandeten Grundflächen gegeneinander verdreht sind. Innerhalb derselben Seitenfläche sind dann die anderen Schneiden (Haupt- und Nebenschneide) zusammen mit der diesen zugeordneten Spanmulde auf der gegenüberliegenden Seite in der anderen Schneidkörperhälfte angeordnet.

Die Anlagefläche ist zwischen den beiden Spanmulden der jeweiligen Seitenfläche und gegenüber den Muldenböden der beiden Spanmulden erhöht. Rückwärtig des jeweiligen Spanmuldenendes erstreckt sich die Anlagefläche symmetrisch bis zu den einander gegenüber liegenden Hauptschneiden hin, während im Bereich zwischen den Spanmulden ein vergleichsweise schmaler Flächenbereich in Form des taillierten Flächenbereiches der Anlagefläche vorgesehen ist.

Grundsätzlich weist jede Spanmulde einen vergleichsweise langen Muldenrücken auf, der an die dieser Spanmulde zugeordnete Hauptschneide herangeführt ist. Ein weiterer, vergleichsweise schmaler Muldenrücken derselben Spanmulde ist an die über die Eckenkante mit dieser Hauptschneide verbundene Nebenschneide herangeführt. Dabei kann in vorteilhafter Ausgestaltung der oder jeder dieser Muldenrücken unter Ausbildung einer abgesenkten Hauptschneide bzw. unter Ausbildung einer abgesenkten Nebenschneide zur Zentralachse hin (konkav) eingewölbt sein. Demzufolge sind dann die Hauptschneid und/oder die Nebenschneide im Kantenbereich zwischen dieser Seitenfläche und der dieser zugeordneten Grundfläche bzw. der an diese Seitenfläche angrenzenden Seitenfläche zur Zentralachse hin eingezogen. Die entsprechende Eckenkante weist dann einen Übergangsbereich auf, der gegenüber der eingezogenen Hauptschneide und der angrenzenden ebenfalls eingezogenen Nebenschneide erhaben ist.

Die Nebenschneiden aneinander angrenzender Seitenflächen sind im mittleren Bereich zwischen den beiden jeweils aneinander grenzenden Schneidkörperhälften teilweise überlappend, jedoch zueinander beabstandet aneinander vorbeigeführt. In diesem mittleren Bereich bilden die aneinander beabstandet vorbeigeführten Schneidenenden der Nebenschneiden in jeder dieser beiden aneinandergrenzenden Seitenflächen eine Versatzfläche aus. Dabei stehen diese beiden Versatzflächen unter einem Winkel, zweckmäßigerweise in einem stumpfen Winkel oder etwa rechtwinklig, aufeinander.

Ein mehrschneidiger, dreh- und wendbarer Schneideinsatz, bei dem die Nebenschneiden aneinander angrenzender Seitenflächen endseitig zueinander beabstandet und unter Ausbildung von unter einem Winkel aufeinander stehenden Versatzflächen aneinander vorbeigeführt sind, ist bereits allein für sich erfinderisch. Diese Ausbildung der Nebenschneiden eines derartigen Schneideinsatzes stellt somit eine eigenständige Erfindung dar.

Aufgrund der vier identischen Seitenflächen und der diese begrenzenden zwei identischen Grundflächen weist der erfindungsgemäße Schneideinsatz eine 90°-Symmetrie auf. Die als Haupt- und Nebenschneiden wirksamen Schneiden oder Schneidkanten des Schneideinsatzes können somit durch jeweils eine 90°-Drehung des Schneideinsatzes in einem Werkzeughalter nacheinander in Benutzung genommen werden, bevor der Schneideinsatz im Werkzeughalter um 180° gewendet wird, um die weiteren vier Schneiden durch entsprechende 90°-Drehungen in Benutzung zu nehmen. Der insbesondere als Tangentialschneideinsatz geeignete Schneideinsatz ist hierzu bezogen auf die Längsachse des zu bearbeitenden Werkstücks im Werkzeughalter hochkant stehend angeordnet.

Ein besonders bevorzugter Werkzeughalter für einen solchen achtschneidigen, dreh- und wendbaren Schneideinsatz bzw. Tangentialschneideinsatz weist eine Ausnehmung als Plattensitz mit einer Anlagefläche zur Anlage des Schneideinsatzes mit dessen Grundflächen sowie zwei hierzu und zueinander im Wesentlichen rechtwinklig angeordnete Auflagebereiche zur Anlage des Schneideinsatzes mit dessen Seitenflächen auf. Diese Auflagebereiche sind zur Anlage der jeweiligen Seitenfläche mit deren Anlagefläche ausgebildet.

Dabei weisen die Auflagebereiche zweckmäßigerweise einen nach Art eines Abdrucks der- insbesondere ebenen oder planaren - Anlageflächen der vorzugsweise identischen Seitenflächen ausgebildeten Stützbereich auf. Mittels dieser Geometrie der als Plattensitz wirksamen Ausnehmung des Werkzeughalters, beispielsweise eines Drehwerkzeugs, insbesondere eines Drehmeißels, werden die bei der spanenden Bearbeitung entstehenden hohen Kräfte zuverlässig in den Werkzeughalter eingeleitet und somit von diesem zur Gewährleistung eines zerstörungssicheren Plattensitzes aufgenommen.

Vorzugsweise ist der oder jeder Auflagebereich durch ein in die Ausnehmung eingesetztes, insbesondere aus einem Hartstoff bestehendes, Auflageelement gebildet. Zudem weist die Ausnehmung geeigneterweise einen im Wesentlichen quadratischen Anlagebereich zur Anlage des Schneideinsatzes mit dessen Grundfläche auf.

Bei der spanenden Bearbeitung eines Werkstücks mit einem solchen Schneideinsatz wird aufgrund der in die Seitenflächen eingebrachten oder eingeformten Spanmulden eine besonders gute Spanformung und ein besonders großer Spanbruchbereich erzielt. Zudem sind ein erhöhtes Spanvolumen durch einen vergleichsweise weichen Schnitt mit positivem radialem Spanwinkel sowie eine erhöhte Variabilität aufgrund eines Einstellwinkels von größer 90° realisierbar.

Der erfindungsgemäße Schneideinsatz wird vorteilhafterweise als Press- oder Spritzgussteil hergestellt. Ein üblicherweise im Anschluss an einen Pressvorgang eines sol chen Schneidkörpers erforderlicher Schleifvorgang in einem weiteren Bearbeitungsschritt kann somit entfallen.

Nachfolgend werden Ausführungsbeispiele der Erfindung anhand einer Zeichnung näher erläutert. Darin zeigen:
- Fig. 1: in perspektivischer Ansicht einen achtschneidigen Schneideinsatz mit gegenei- nander verdrehten Schneidkörperhälften und mit in den gleichartigen Seitenflä- chen vorgesehenen, im Bereich der Flächenmitte hyperbelartig taillierten Anlage- flächen,
- Fig. 2: in perspektivischer Ansicht eine Variante des Schneideinsatzes mit zusätzlichen keilförmigen Flächenbereichen der Anlageflächen,
- Fig. 3: in perspektivischer Ansicht eine Ausführungsform des Schneideinsatzes gemäß Fig. 1 mit eingezogenen oder eingewölbten Hauptschneiden und eingezogenen bzw. eingewölbten Nebenschneiden,
- Fig. 4: in perspektivischer Ansicht einen Werkzeughalter zur Aufnahme eines derartigen Schneideinsatzes, und
- Fig. 5: in einer Seitenansicht den Werkzeughalter mit eingesetztem Schneideinsatz als Tangentialschneideinsatz.

Einander entsprechende Teile sind in allen Figuren mit den gleichen Bezugszeichen versehen.

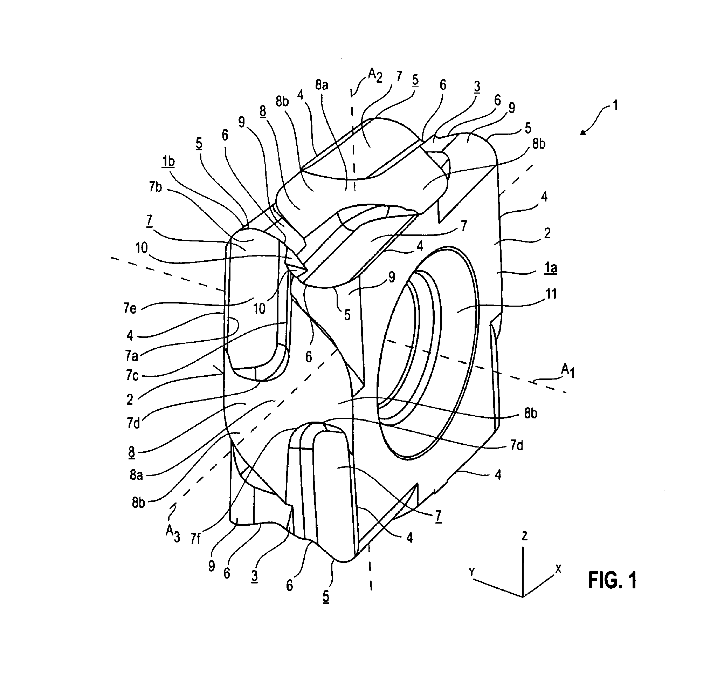

Gemäß den Figuren 1 bis 3 weist der nachfolgend als Schneideinsatz bezeichnete Tangentiaischneideinsatz 1 zwei einander gegenüberliegende, gleichartige und im Wesentlichen quadratische Grundflächen 2 sowie vier gleichartige Seitenflächen 3 auf, von denen zwei aneinander angrenzende Seitenflächen 3 sichtbar sind. Bezogen auf das dargestellte Koordinatensystem (x,y,z) verläuft die zu den Grundflächen 2 senkrechte zentrale Plattenachse oder Zentralachse A₁ in y-Richtung. Eine hierzu senkrechte Achse A₂ verläuft in z-Richtung und steht senkrecht auf zwei einander gegenüberliegenden Seitenflächen 3. Eine sowohl zur Zentralachse A₁ als auch zu dieser Achse A₂ senkrechte Achse A₃, die zu den beiden anderen gegenüberliegenden Seitenflächen 3 senkrecht verläuft, verläuft in x-Richtung. In der von den zu den Seitenflächen 3 normalen Achsen A₂ und A₃ aufgespannten Ebene befindet sich die Mittelebene der Schneidplatte 1, wobei zu dieser Mittelebene die beiden Grundflächen 2 entlang der Zentralachse A₁ äquidistant beabstandet sind.

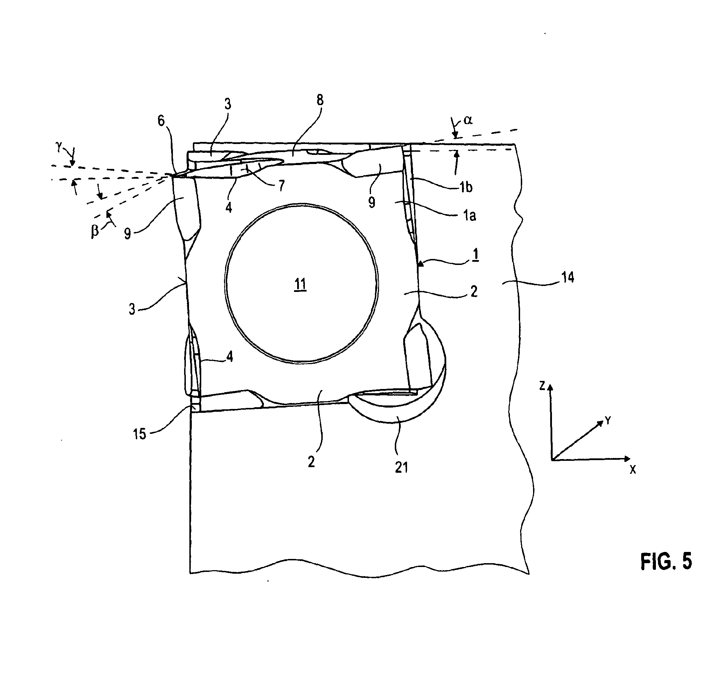

Die beiden Grundflächen 2 sind zueinander um die Zentralachse A₁ verdreht, wie dies aus Fig. 5 vergleichsweise deutlich ersichtlich ist. Der Verdrehwinkel α der beiden Grundflächen 2 sollte grundsätzlich größer als 0° und kleiner als 20° sein und beträgt insbesondere (10 ± 5)°. Bevorzugt liegt der Verdrehwinkel α im Bereich eines üblichen oder typischen Freiwinkel von ca. 6° und beträgt bevorzugt etwa 8°. Aufgrund der bezogen auf die x-Richtung - und ebenso auf die z-Richtung - um jeweils etwa 4° gegeneinander gedrehten Grundflächen 2 sind somit quasi zwei Schneidkörperhälften 1 a und 1 b gebildet, die in der durch die beiden Achsen A₂ und A₃ aufgespannten Mittelebene (xz-Ebene) aneinander angrenzen bzw. ineinander übergehen.

Jede der gleichartigen oder identischen Seitenflächen 3 bildet mit jeder Grundfläche 2 eine Hauptschneide 4. Diese erstreckt sich lediglich über einen Teil der Länge der jeweiligen Seitenfläche 3. Zudem weist jede Seitenfläche 3 einander gegenüberliegende abgerundete oder bogenförmige Eckenkanten 5 auf. Diese bilden eine an die jeweilige Hauptschneide 4 angrenzende und sich in die an diese Seitenfläche 3 angrenzende Seitenfläche 3 erstreckende Nebenschneide 6. Jede dieser aus Hauptschneide 4, Eckenkante 5 und Nebenschneide 6 gebildeten Schneidkanten ist eine Spanstufe 7 zugeordnet. Diese ist als in die jeweilige Seitenfläche 3 eingezogene, d.h. zur Zentralachse A₁ hin eingewölbte Spanmulde ausgebildet. Innerhalb der jeweiligen Seitenfläche 3 liegen sich somit zwei nachfolgend auch als Spanmulden bezeichnete Spanstufen 7 - ebenso wie die zugeordneten Hauptschneiden 4, die Eckenkanten 5 und die Nebenschneiden 6 - diagonal gegenüber.

Jede Spanmulde 7 weist einen an die jeweilige Hauptschneide 4 herangezogenen, d. h. bezogen auf einen Muldenboden 7e hochgezogenen Muldenrücken 7a und einen an die jeweilige Nebenschneide 6 herangeführten Muldenrücken 7b sowie einen der jeweils anderen Spanmulde 7 dieser Seitenfläche 3 zugewandten Muldenrücken 7c und ein Spanstufen- oder Spanmuldenende 7d auf. Das Spanstufenende 7d, das sich innerhalb der jeweiligen Seitenfläche 3 befindet, ist zu der nächstgelegenen angrenzenden Seitenfläche 3 beabstandet. Dieses Spanstufen- bzw. Spanmuldenende 7d ist ebenfalls von einem gegenüber dem Muldenboden 7e hochgezogenen Muldenrücken gebildet.

Zwischen den beiden Spanstufen bzw. Spanmulden 7 der jeweiligen Seitenfläche 3 ist eine Anlagefläche 8 ausgebildet. Diese gegenüber den Spanmulden 7 erhabene und planare oder ebene Anlagefläche 8 erstreckt sich symmetrisch über die Spanstufenenden 7d der angrenzenden Spanstufe 7 hinaus und in Querrichtung der Hauptschneiden 4 bis an diese angrenzend. Die Hauptschneiden 4 verlaufen somit ausgehend von der jeweiligen Eckenkante 5 entlang der Anlagefläche 8 bis hin zu einem zwischen dieser Seitenfläche 3 und der der Hauptschneide 4 zugeordneten Grundfläche 2 vorgesehenen abgerundeten Kantenbereich 9. Dieser endet praktisch in der abgerundeten oder bogenförmige ausgebildeten Eckenkante 5 der jeweils angrenzenden Seitenfläche 3. Dort bildet der abgerundete Kantenbereich 9 zumindest einen Teilbereich einer Nebenfreifläche für die Nebenschneide 6 der angrenzenden Seitenfläche 3 aus.

Die jeweilige Anlagefläche 8 ist in deren Grundform prinzipiell oval, kreis- oder elipsenförmig. Die Anlagefläche 8 weist im Bereich der Flächenmitte der jeweiligen Seitenfläche 3 einen hyperbelartig eingezogenen, taillierten Flächenbereich 8a auf. An diesen taillierten Flächenbereich 8a schießen sich rotationssymmetrisch zur jeweiligen Achse A₂, A₃ aufgeweitete Flächenbereiche 8b an. Die vier gleichartigen Anlageflächen 8 der vier gleichartigen oder identischen Seitenflächen 3 weisen somit quasi die Form einer Streitaxt auf. In dieser Form oder Geometrie der Anlagefläche 8 ist diese um die jeweilige, zu den jeweils einander gegenüberliegenden Seitenflächen 3 senkrechten Achsen A₂ und A₃ verdreht.

An den zentralen taillierten Flächenbereich 8a der Anlagefläche 8 grenzen die Spanstufen bzw. Spanmulden 7 unmittelbar an. Die jeweilige Spanstufe 7 weist somit eine der jeweiligen Eckenkante 5 diagonal gegenüberliegende, abgerundete, kreis- oder bogenförmige Stufenecke 7f auf, mit der diese Spanstufe oder Spanmulde 7 an die Anlagefläche 8 angrenzt. Die jeweilige abgerundete Stufenecke 7f bildet somit zumindest einen Teil des Stufen- bzw. Muldenendes 7d. Die Spanstufen 7f erstrecken sich bei dieser Variante zwischen den Haupt- und Nebenschneiden 4 bzw. 6 und dem taillierten mittleren Flächenbereich 8a der Anlagefläche 8 sowie demjenigen Flächenbereich oder -abschnitt des abgerundeten Kantenbereichs 9, der die Nebenfreifläche für die Nebenschneide 6 der jeweils angrenzenden Seitenfläche 3 bildet.

Die Nebenschneiden 6 der aneinander angrenzenden Seitenflächen 3 überschneiden sich - in der Ebenen der jeweiligen Seitenfläche 3 - zueinander beabstandet. Die beiden Nebenschneiden 6 gehen somit weder direkt noch indirekt ineinander über, sondern verlaufen zueinander beabstandet unter Ausbildung von Versatzflächen 10. Diese Versatzflächen 10 befinden sich in der Ebene der entsprechenden Seitenfläche 3 und stehen somit rechtwinklig oder in einem stumpfen Winkel zu- oder aufeinander.

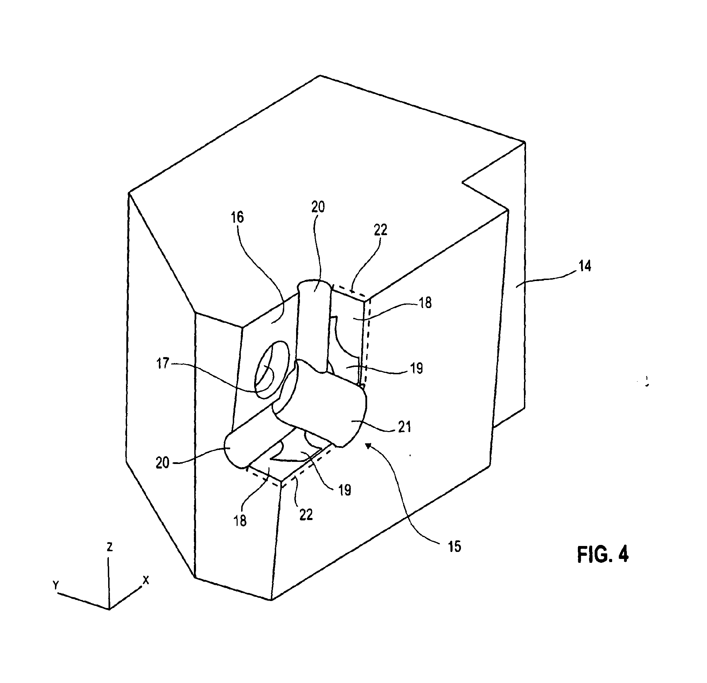

Eine zentrale Bohrung 11, die die Schneidplatte 1 entlang der Zentralachse A₁ durchsetzt, dient zur Aufnahme eines (nicht dargestellten) Fixierelementes, beispielsweise einer Schraube oder eines Bolzens, für eine Spann- und/oder Klemmfixierung des Schneideinsatzes 1 in einem in den Figuren 4 und 5 gezeigten Werkzeughalter eines Drehwerkzeugs.

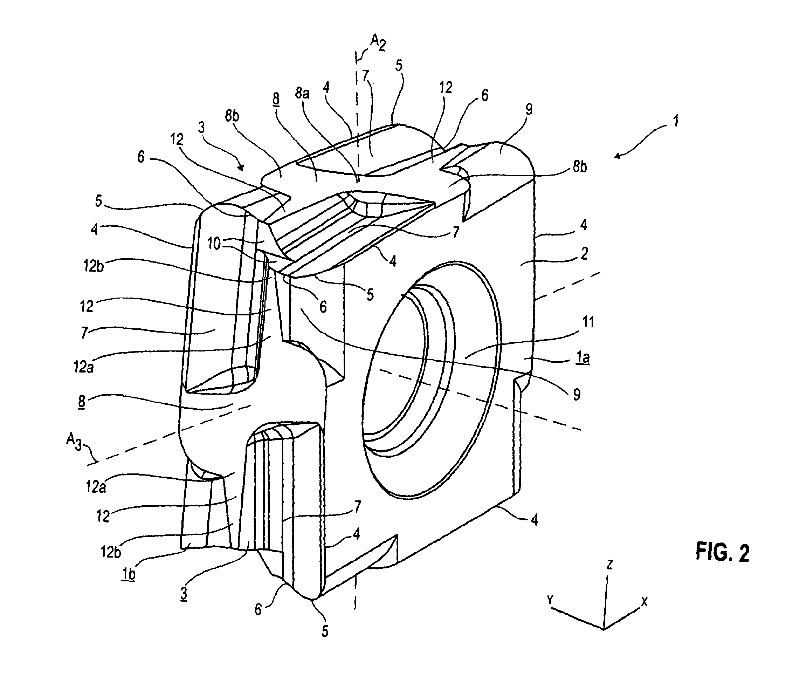

Der in Fig. 2 dargestellte Schneideinsatz 1 entspricht wiederum dem Schneideinsatz 1 gemäß Fig. 1, wobei im Unterschied zu dem dort dargestellten Schneideinsatz 1 die Anlagefläche 8 zwei einander diagonal gegenüberliegende keilförmige Flächenbereiche 12 aufweist. Diese Flächenbereiche 12 schließen sich an das jeweilige Spanstufenoder Muldenende 7d der in derselben Schneidkörperhälfte 1 a, 1 b sich befindenden Spanstufe bzw. Spanmulde 7 an. Diese, zur Achse A₂ oder zur Achse A₃ symmetrischen ebene Flächenbereiche 12 erstrecken sich ausgehend von deren dem taillierten Flächenbereich 8a zugewandten und an diesen anschließenden aufgeweiteten Flächenrücken 12a mit deren diesen gegenüber liegenden Flächenspitzen 12b bis hin zur jeweiligen Nebenschneide 6 der in dieser Schneidplattenhälfte 1 a bzw. 1 b angrenzenden Seitenfläche 3 und bilden dort die oder einen weiteren Teilbereich der Nebenfreifläche aus. Die Spanstufen 7 erstrecken sich bei dieser Variante zwischen den Haupt- und Nebenschneiden 4 bzw. 6 und dem taillierten mittleren Flächenbereich 8a der Anlagefläche 8 sowie deren keilförmigen Flächenbereich 12.

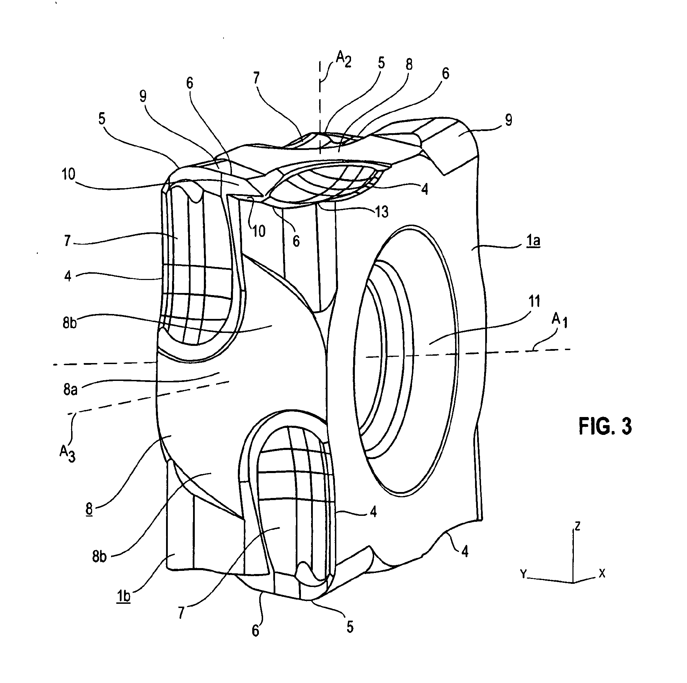

Der in Fig. 3 dargestellt Schneideinsatz 1 unterscheidet sich vom Schneideinsatz nach Fig. 1 dadurch, dass die jeweilige Hauptschneide 4 sowie die jeweilige Nebenschneide 6 (konkav) eingewölbt, d.h. zur Zentralachse A₁ hin eingezogen sind. Infolge dieser Geometrie stellt der Übergangsbereich zwischen der Hauptschneide 4 und der Nebenschneide 6 den höchsten Schneidkantenpunkt 13 innerhalb der Eckenkante 5 dar. Der Schneidkantenpunkt 13 und damit die Eckenkante 5 ist somit bezogen auf die durch die Zentralachse A₁ einerseits und die Achse A₂ bzw. die Achse A₃ aufgespannte Ebene weiter entfernt, als derjenige Schneidkantenbereich der eingezogenen oder eingewölbten Hauptschneide 4 und/oder Nebenschneide 6, der zur Zentralachse A₁ den geringsten oder minimalen Schneidkantenabstand aufweist.

Fig. 4 zeigt perspektivisch einen Werkzeughalter 14 für einen derartigen achtschneidigen, dreh- und wendbaren Schneideinsatz 1. Der Werkzeughalter 14 weist hierzu eine Ausnehmung 15 als Plattensitz für den Schneideinsatz 1 auf. Den als Drehmeißel ausgeführten Werkzeughalter 14 mit eingesetztem Schneideinsatz 1 zeigt Fig. 5 in einer Seitenansicht auf eine Seitenfläche 3.

Die Ausnehmung 15 weist eine Anlagefläche 16 auf, an der der Schneideinsatz 1 mit dessen Grundfläche 2 anliegt. Eine Gewindebohrung 17 im Bereich dieser Anlagefläche 16 dient zur Aufnahme der (nicht dargestellten) Fixierschraube, die die Zentralbohrung 11 des Schneideinsatzes 1 durchsetzt und mittels derer der Schneideinsatz 1 innerhalb der Ausnehmung 15 an diese Anlagefläche 16 im Montagezustand gespannt ist. Die Ausnehmung 15 weist zudem zwei im Wesentlichen rechtwinklig zueinander angeordnete Auflagebereiche 18 zur Anlage des Schneideinsatzes 1 mit jeweils zwei aneinander angrenzenden Seitenflächen 3 auf.

Im Bereich jeder dieser Auflagebereiche 18 ist ein Stützbereich oder eine Stützfläche 19 vorgesehen, mit der die jeweilige Seitenfläche 3 lediglich im Bereich der Anlagefläche 8 im entsprechenden Auflagebereich 18 der Ausnehmung 15 anliegt. Kreisbogenförmige Eckenbereiche 20 und 21 der Ausnehmung 15 bilden in den Werkzeughalter 14 einbezogene Aufnahmebereiche, in denen diejenigen Hauptschneiden 4, Nebenschneiden 6 bzw. Eckenkanten 5 des Schneidkörpers 1 einliegen, die zwischen den in der Ausnehmung 15 einliegenden Seitenflächen 3 und der an der Anlagefläche 16 anliegenden Grundfläche 2 gebildet sind.

Der oder jeder Auflagebereich 18 kann auch durch ein beispielsweise plattenartiges (strichliniert dargestelltes) Auflageelement 22 als zusätzliche Unterlage gebildet sein, welches in die Ausnehmung 15 eingesetzt und dort fixiert wird. Ein solches, vorzugsweise aus einem harten Material bestehendes zusätzliches Auflageelement 22 ist insbesondere bei einer schweren Zerspanung vorteilhaft.

Wie aus Fig. 5 vergleichsweise deutlich ersichtlich ist, ist der Schneideinsatz 1 im Werkzeughalter 14 bezogen auf die in γ-Richtung verlaufende Längsachse des zu bearbeitenden (nicht dargestellten) Werkstücks hochkantstehend angeordnet. Die bei dieser Anordnung der Schneidplatte 1 im Einsatz befindliche Haupt- und Nebenschneide 4 bzw. 6 führen zwar aufgrund der negativen Lage der Schneidplatte 1 im Werkzeughalter 14 und infolge der gegenüber der an der Anlagefläche 16 der Ausnehmung 15 anliegenden Grundfläche 2 verdrehten, sich im Einsatz befindenden Grundseite 2 grundsätzlich zu einem negativen radialen Spanwinkel. Die eingezogenen Ausgestaltung oder Geometrie der Nebenschneide 6 gemäß der Ausführungsform nach Fig. 3 führt jedoch insgesamt zu einem positiven radialen Spanwinkel β.

Analog sind auch die Verhältnisse bezüglich des axialen Spanwinkels, der bei einer entsprechenden Einbaulage des Schneideinsatzes 1, wie dieser in den Fig. 1 und 2 dargestellt ist, ebenfalls grundsätzlich zu einem negativen Spanwinkel entsprechend dem Neigungs- oder Verdrehwinkel α führt. Die eingezogene oder abgesenkte Ausgestaltung bzw. Geometrie der Hauptschneide 4 gemäß der Ausführungsform nach Fig. 3 führt jedoch wiederum insgesamt zu einem positiven axialen Spanwinkel γ. In dieser Ausgestaltung des Schneideinsatzes 1 und dessen Anordnung im Werkzeughalter 14 ist dieser als Tangentialschneideinsatz 1 mit sowohl positivem axialen Spanwinkel γ als auch positivem radialen Spanwinkel β wirksam.

Die als Spanmulden 7 ausgebildeten und somit als muldenartig tiefgezogenen, d. h. in die jeweilige Seitenfläche 3 zur Zentralachse A1 hin eingewölbten Spanleitflächen gewährleisten eine besonders zuverlässige Spanabfuhr bei der Drehbearbeitung des Werkstücks. Infolge der symmetrischen Anlagefläche 8 sind besonders geeignete Stützstellen oder Stützbereiche 19 für einen zuverlässigen Plattensitz des plattenartigen Schneideinsatz 1 (Schneidplatte) im Werkzeughalter 14 hergestellt.

## Patentansprüche

1. Achtschneidiger dreh- und wendbarer Schneideinsatz (1) mit zwei einander gegenüberliegenden, im Wesentlichen quadratischen Grundflächen (2), die um eine zu diesen senkrecht verlaufende Zentralachse (A₁) gegeneinander verdreht sind, sowie mit vier identischen Seitenflächen (3), wobei zwischen jeder Grundfläche (2) und jeder Seitenfläche (3) eine Hauptschneide (4) gebildet ist,
wobei jede Seitenfläche (3) zwei einander diagonal gegenüberliegende Eckenkanten (5) aufweist, die eine an die jeweilige Hauptschneide (4) angrenzende Nebenschneide (6) ausbilden, **dadurch gekennzeichnet,**
- **dass** jede Seitenfläche (3) zwei Spanstufen (7) aufweist, die ausgehend von der jeweiligen Eckenkante (5) sich entlang der zugeordneten Hauptschneide (4) bis zu einem rückwärtigen Stufenende (7d) erstrecken,
- **dass** zwischen den Spanstufen (7) eine Anlagefläche (8) gebildet ist, die sich symmetrisch über die Stufenenden (7d) der angrenzenden Spanstufe (7) hinaus und in Querrichtung der Hauptschneiden (4) bis an diese angrenzend erstreckt.

2. Schneideinsatz (1) nach Anspruch 1,
**dadurch gekennzeichnet,**
**dass** sich die Hauptschneide (4) lediglich über einen Teil der Länge der Seitenfläche (3), insbesondere zwischen der zugeordneten Eckenkante (5) und einem abgerundeten Kantenabschnitt (9) dieser Grundfläche (2), erstreckt.

3. Schneideinsatz (1) nach Anspruch 1 oder 2,
**dadurch gekennzeichnet,**
**dass** die Eckenkanten (5) abgerundet, insbesondere kreis- oder bogenförmig ausgebildet, sind.

4. Schneideinsatz (1) nach einem der Ansprüche 1 bis 3,
**dadurch gekennzeichnet,**
**dass** sich die Anlagefläche (8) in Längsrichtung der Hauptschneiden (4) über die gesamte Seitenfläche (3) erstreckt.

5. Schneideinsatz (1) nach einem der Ansprüche 1 bis 4,
**dadurch gekennzeichnet,**
**dass** die Anlagefläche (8) eine im Wesentlichen kreisförmige oder ovale Flächenkontur mit einem taillierten mittleren Flächenbereich (8a) aufweist.

6. Schneideinsatz (1) nach Anspruch 5,
**dadurch gekennzeichnet,**
**dass** die Anlagefläche (8) rotationssymmetrisch zum taillierten mittleren Flächenbereich (8a) zwei keilförmige Flächenbereiche (12) aufweist, deren jeweilige Flächenspitze (12b) an die Nebenschneide (6) der angrenzenden Seitenfläche (3) herangeführt ist.

7. Schneideinsatz (1) nach Anspruch 6,
**dadurch gekennzeichnet,**
**dass** die Spanstufen (7) zwischen dem taillierten mittleren Flächenbereich (8a) und dem keilförmigen Flächenbereiche (12) gebildet sind.

8. Schneideinsatz (1) nach einem der Ansprüche 1 bis 7,
**dadurch gekennzeichnet,**
**dass** die jeweilige Spanstufe (7) eine der jeweiligen Eckenkante (5) diagonal gegenüber liegende, insbesondere abgerundete, kreis- oder bogenförmige, Stufenecke (7f) aufweist, mit der diese Spanstufe (7) an die Anlagefläche (8) angrenzt.

9. Schneideinsatz (1) nach einem der Ansprüche 1 bis 8,
**dadurch gekennzeichnet,**
**dass** die Spanstufen (7) als in die Seitenfläche (3) eingezogene Spanmulden ausgebildet sind

10. Schneideinsatz (1) nach Anspruch 9,
**dadurch gekennzeichnet,**
**dass** sich die Spanmulden (7) ausgehend von der jeweiligen Eckenkante (5) entlang der dieser zugeordneten Hauptschneide (4) bis zu einem rückwärtigen Spanmuldenende (7d) erstrecken.

11. Schneideinsatz (1) nach einem der vorhergehenden Ansprüche,
**gekennzeichnet durch**
eine vom abgerundeten Kantenabschnitt (9) und/oder von der Anlagefläche (8), insbesondere deren keilförmigen Flächenbereich (12), gebildete Nebenfreifläche für die Nebenschneide (6) der angrenzenden Seitenfläche (3).

12. Schneideinsatz (1) nach einem der Ansprüche 1 bis 11,
**dadurch gekennzeichnet,**
**dass** die jeweilige Hauptschneide (4) und/oder die jeweilige Nebenschneide (6) zur Zentralachse (A₁) hin eingewölbt ist.

13. Schneideinsatz (1) nach einem der Ansprüche 1 bis 12,
**dadurch gekennzeichnet,**
**dass** die Nebenschneiden (6) aneinander angrenzender Seitenflächen (3) endseitig zueinander beabstandet und unter Ausbildung von unter einem Winkel aufeinander stehenden Versatzflächen (10) aneinander vorbei geführt sind.

14. Werkzeughalter (14) mit einem Schneideinsatz (1) nach einem der Ansprüche 1 bis 13.

15. Werkzeughalter (14) nach Anspruch 14,
**gekennzeichnet durch**
eine Ausnehmung (15) als Plattensitz mit einer Anlagefläche (16) zur Anlage des Schneideinsatzes (1) mit dessen Grundflächen (2) sowie mit zwei im wesentlichen rechtwinklig zueinander angeordneten Auflagebereichen (18) zur Anlage des Schneideinsatzes (1) mit zwei seiner Seitenflächen (3), wobei die Auflagebereiche (18) zur Anlage der jeweiligen Seitenfläche (3) mit deren Anlageflächen (8) ausgebildet sind.

## Claims

1. Eight-edged rotatable and reversible cutting insert (1) having two opposite, substantially square base surfaces (2) which are twisted relative to one another about a central axis (A₁) running perpendicularly to said base surfaces (2), and having four identical side surfaces (3), wherein a main lip (4) is formed between each base surface (2) and each side surface (3),
wherein each side surface (3) has two diagonally opposite corner edges (5) which form a secondary lip (6) adjacent to the respective main lip (4), **characterized**
- **in that** each side surface (3) has two chip grooves (7) which, starting from the respective corner edge (5), extend along the associated main lip (4) up to a rear groove end (7d),
- **in that** a bearing surface (8) is formed between the chip grooves (7), said bearing surface (8) extending symmetrically beyond the groove ends (7d) of the adjacent chip groove (7) and transversely to the main lips (4) until it adjoins the latter.

2. Cutting insert (1) according to Claim 1,
**characterized in that**
the main lip (4) extends only over part of the length of the side surface (3), in particular between the associated corner edge (5) and a rounded-off edge section (9) of this base surface (2).

3. Cutting insert (1) according to Claim 1 or 2,
**characterized in that**
the corner edges (5) are rounded off and in particular are of circular or curved design.

4. Cutting insert (1) according to one of Claims 1 to 3,
**characterized in that**
the bearing surface (8) extends in the longitudinal direction of the main lips (4) over the entire side surface (3).

5. Cutting insert (1) according to one of Claims 1 to 4,
**characterized in that**
the bearing surface (8) has a substantially circular or oval surface contour having a waisted central surface region (8a).

6. Cutting insert (1) according to Claim 5,
**characterized in that**
the bearing surface (8), in a rotationally symmetrical manner with respect to the waisted central surface region (8a), has two wedge-shaped surface regions (12), the respective surface tip (12b) of which is brought up to the secondary lip (6) of the adjacent side surface (3).

7. Cutting insert (1) according to Claim 6,
**characterized in that**
the chip grooves (7) are formed between the waisted central surface region (8a) and the wedge-shaped surface regions (12).

8. Cutting insert (1) according to one of Claims 1 to 7,
**characterized in that**
the respective chip groove (7) has an in particular rounded-off, circular or curved groove corner (7f) which is diagonally opposite the respective corner edge (5) and with which this chip groove (7) adjoins the bearing surface (8).

9. Cutting insert (1) according to one of Claims 1 to 8,
**characterized in that**
the chip grooves (7) are designed as chip pockets drawn into the side surface (3).

10. Cutting insert (1) according to Claim 9,
**characterized in that**
the chip pockets (7), starting from the respective corner edge (5), extend along the main lip (4) assigned to said corner edge (5) up to a rear chip pocket end (7d).

11. Cutting insert (1) according to one of the preceding claims,
**characterized**
**by** a secondary flank formed by the rounded-off edge section (9) and/or by the bearing surface (8), in particular the wedge-shaped surface region (12) thereof, and intended for the secondary lip (6) of the adjacent side surface (3).

12. Cutting insert (1) according to one of claims 1 to 11,
**characterized in that**
the respective main lip (4) and/or the respective secondary lip (6) are/is arched inward toward the central axis (A₁).

13. Cutting insert (1) according to one of claims 1 to 12,
**characterized in that**
the secondary lips (6) of side surfaces (3) adjacent to one another are spaced apart at the ends and are directed past one another, with offset surfaces (10) disposed at an angle to one another being formed.

14. Tool holder (14) having a cutting insert (1) according to one of Claims 1 to 13.

15. Tool holder (14) according to Claim 14,
**characterized**
**by** a recess (15) as tip seat, comprising a bearing surface (16) for the cutting insert (1) to bear against with its base surfaces (2), and comprising two seating regions (18) arranged substantially at right angles to one another and intended for the cutting insert (1) to bear against with two of its side surfaces (3), wherein the seating regions (18) are designed for the respective side surface (3) to bear against with its bearing surfaces (8).

## Revendications

1. Outil de coupe (1) rotatif et pivotant à huit tranchants, comprenant deux surfaces de base (2) essentiellement carrées opposées l'une à l'autre, qui sont tournées l'une par rapport à l'autre autour d'un axe central (A₁) s'étendant perpendiculairement à celles-ci, et comprenant quatre faces latérales identiques (3), un tranchant principal (4) étant formé entre chaque surface de base (2) et chaque face latérale (3),
chaque face latérale (3) présentant deux arêtes de coin (5) diagonalement opposées l'une à l'autre, qui constituent un tranchant secondaire (6) adjacent au tranchant principal respectif (4),
**caractérisé**
- **en ce que** chaque face latérale (3) présente deux crans à copeaux (7) qui s'étendent depuis l'arête de coin respective (5) le long du tranchant principal associé (4) jusqu'à une extrémité de cran arrière (7d),
- **en ce qu'**une face d'appui (8) est réalisée entre les crans à copeaux (7), laquelle s'étend symétriquement au-delà des extrémités de cran (7d) du cran à copeaux adjacent (7) et dans la direction transversale des tranchants principaux (4) jusqu'à côté de ceux-ci.

2. Outil de coupe (1) selon la revendication 1,
**caractérisé en ce que**
le tranchant principal (4) s'étend uniquement sur une partie de la longueur de la face latérale (3), en particulier entre l'arête de coin associée (5) et une portion d'arête arrondie (9) de cette surface de base (2).

3. Outil de coupe (1) selon la revendication 1 ou 2,
**caractérisé en ce que**
les arêtes de coin (5) sont réalisées sous forme arrondie, en particulier sous forme circulaire ou arquée.

4. Outil de coupe (1) selon l'une quelconque des revendications 1 à 3,
**caractérisé en ce que**
la face d'appui (8) s'étend dans la direction longitudinale des tranchants principaux (4) sur toute la face latérale (3).

5. Outil de coupe (1) selon l'une quelconque des revendications 1 à 4,
**caractérisé en ce que**
la face d'appui (8) présente un contour de surface essentiellement circulaire ou ovale, avec une région de face centrale profilée (8a).

6. Outil de coupe (1) selon la revendication 5,
**caractérisé en ce que**
la face d'appui (8) présente, suivant une symétrie de révolution par rapport à la région de face centrale profilée (8a), deux régions de face (12) en forme de clavette, dont la pointe de face (12b) respective est rapprochée du tranchant secondaire (6) de la face latérale adjacente (3).

7. Outil de coupe (1) selon la revendication 6,
**caractérisé en ce que**
les crans à copeaux (7) sont formés entre la région de face centrale profilée (8a) et les régions de face (12) en forme de clavette.

8. Outil de coupe (1) selon l'une quelconque des revendications 1 à 7,
**caractérisé en ce que**
le cran à copeaux respectif (7) présente un coin de cran (7f) diagonalement opposé à l'arête de coin respective (5), en particulier arrondi, de forme circulaire ou arquée, avec lequel ce cran à copeaux (7) est adjacent à la face d'appui (8).

9. Outil de coupe (1) selon l'une quelconque des revendications 1 à 8,
**caractérisé en ce que**
les crans à copeaux (7) sont réalisés sous forme de creux à copeaux rentrés dans la face latérale (3).

10. Outil de coupe (1) selon la revendication 9,
**caractérisé en ce que**
les creux à copeaux (7) s'étendent depuis l'arête de coin respective (5) le long du tranchant principal (4) qui lui est associé, jusqu'à une extrémité arrière de creux à copeaux (7d).

11. Outil de coupe (1) selon l'une quelconque des revendications précédentes, **caractérisé par**
une face libre auxiliaire formée par la portion d'arête arrondie (9) et/ou par la face d'appui (8), notamment par sa région de face (12) en forme de clavette, pour le tranchant secondaire (6) de la face latérale adjacente (3).

12. Outil de coupe (1) selon l'une quelconque des revendications 1 à 11,
**caractérisé en ce que**
le tranchant principal respectif (4) et/ou le tranchant secondaire respectif (6) est cintré vers l'axe central (A₁).

13. Outil de coupe (1) selon l'une quelconque des revendications 1 à 12,
**caractérisé en ce que**
les tranchants secondaires (6) de faces latérales (3) adjacentes sont espacés les uns des autres du côté de l'extrémité, et sont guidés les uns devant les autres en formant des faces de décalage (10) orientées mutuellement suivant un certain angle.

14. Porte-outil (14) comprenant un outil de coupe (1) selon l'une quelconque des revendications 1 à 13.

15. Porte-outil (14) selon la revendication 14,
**caractérisé par**
un évidement (15) en tant que siège de plaque avec une face d'appui (16) pour l'appui de l'outil de coupe (1) avec ses surfaces de base (2) ainsi que deux régions d'appui (18) disposées essentiellement à angle droit l'une par rapport à l'autre pour l'appui de l'outil de coupe (1) avec deux de ses faces latérales (3), les régions d'appui (18) étant réalisées pour l'appui de la face latérale respective (3) avec ses faces d'appui (8) .
